Europäisches Patentamt

**European Patent Office**

Office européen des brevets

(19)

(11) Numéro de publication: **0 232 198 B1**

(12) **FASCICULE DE BREVET EUROPEEN**

(45) Date de publication de fascicule du brevet:
21.08.91

(51) Int. Cl.⁵: **G08B 25/00, H04M 17/02**

(21) Numéro de dépôt: **87400127.4**

(22) Date de dépôt: **20.01.87**

(54) **Système de protection d'un ensemble de sites d'un réseau par anticipation d'une perturbation.**

(30) Priorité: **22.01.86 FR 8600865**

(43) Date de publication de la demande:
**12.08.87 Bulletin 87/33**

(45) Mention de la délivrance du brevet:
**21.08.91 Bulletin 91/34**

(84) Etats contractants désignés:
**DE GB**

(56) Documents cités:
**FR-A- 2 499 737
US-A- 3 813 500
US-A- 4 039 768
US-A- 4 206 321
US-A- 4 412 292**

(73) Titulaire: **Berruyer, Yves
94 Boulevard Gabriel Péri
F-92240 Malakoff(FR)**

Titulaire: **Chamenat, Gérard
9, rue des Fauvettes
F-92320 Chatillon sous Bagneux(FR)**

Titulaire: **Mounier, Jean-Pierre
2, rue des Favorites
F-75015 Paris(FR)**

(72) Inventeur: **Berruyer, Yves
94 Boulevard Gabriel Péri
F-92240 Malakoff(FR)**
Inventeur: **Chamenat, Gérard
9, rue des Fauvettes
F-92320 Chatillon sous Bagneux(FR)**
Inventeur: **Mounier, Jean-Pierre
2, rue des Favorites
F-75015 Paris(FR)**

(74) Mandataire: **Mongrédien, André et al
c/o BREVATOME 25, rue de Ponthieu
F-75008 Paris(FR)**

## Description

La présente invention a pour objet un système de protection d'un ensemble de sites d'un réseau consistant essentiellement à prévoir une perturbation future sur un site et à intervenir sur ledit site avant que la perturbation ne se produise. L'invention trouve en particulier une application dans la protection des réseaux dont les sites sont accessibles au public, par exemple les cabines téléphoniques publiques ou les distributeurs automatiques de billets de banque.

L'entretien des sites représente une charge importante pour l'exploitant du réseau car ces sites sont souvent détériorés, soit par pur vandalisme, soit, par exemple dans le cas des cabines téléphoniques publiques à monnayeur, pour s'approprier l'argent qu'elles contiennent. De plus, dans les réseaux à péage, où l'utilisateur paie pour l'utilisation d'un site, la détérioration d'un site entraîne une perte de recette pour l'exploitant du réseau.

L'exploitant d'un réseau souhaite en général remettre rapidement en état un site détérioré. En effet, il a été constaté que le fait de laisser un site détérioré pendant plusieurs jours peut inciter certaines personnes à détériorer d'autres sites. A l'inverse, une remise en état rapide des sites détériorés assure une meilleure qualité du service offert aux utilisateurs et contribue à une bonne image de marque de l'exploitant du réseau. Enfin, il est clair qu'une remise en état rapide des sites détériorés est particulièrement importante dans le cas des réseaux à péage.

De nombreux systèmes de surveillance des sites d'un réseau ont déjà été proposés, notamment dans le cas des cabines téléphoniques publiques. Par exemple, un appareil analyseur de trafic de postes téléphoniques publics est décrit dans le brevet d'invention FR-A-2 420 258. Cet appareil comprend des moyens pour mémoriser une limite inférieure et une limite supérieure d'intensité de trafic d'une cabine téléphonique, ces limites étant fixées à partir d'observations du trafic de cette cabine téléphonique sur une période prédéterminée, et des moyens pour comparer l'intensité de trafic réel de la cabine aux limites de trafic mémorisées. Cet appareil permet en particulier de déterminer si une cabine téléphonique est en panne, car alors son trafic est nul.

On connaît également des systèmes de surveillance des cabines téléphoniques publiques qui consistent à prévoir un certain nombre de capteurs sur les organes principaux de la cabine téléphonique, tels que le monnayeur, le combiné et la cabine elle-même, et des moyens d'alarme qui permettent d'émettre une alarme sur la ligne lorsque le signal délivré par le capteur change d'état. De tels systèmes sont décrits notamment dans les brevets d'invention FR-A-2 395 557 et FR-A-2 499 737.

Les systèmes de surveillance connus permettent une surveillance passive des sites du réseau. Ils informent le service d'entretien de l'exploitant du réseau qu'une cabine vient d'être détériorée, ce qui permet d'intervenir rapidement pour réparer cette cabine téléphonique. De tels systèmes de surveillance, s'ils sont efficaces pour maintenir en état de marche les sites du réseau présentent cependant l'inconvénient de ne pas empêcher, ou au moins limiter, la dégradation des sites du réseau. Les charges représentées par la remise en service de sites détériorés restent donc très importantes.

L'invention a précisément pour but de limiter la dégradation des sites d'un réseau accessible au public. L'invention repose sur la constatation que les sites attaqués ne sont pas choisis complètement au hasard, mais que la trajectoire suivie par une personne s'attaquant successivement à plusieurs sites peut être dictée, au moins en partie, par des critères tels que la nature du site, par exemple les cabines de téléphones publics à monnayeur, ou la topographie du réseau, par exemple des sites situés dans une même rue d'une ville.

Cette constatation permet d'envisager la prévision de la trajectoire d'une personne s'attaquant aux sites d'un réseau. Cette prévision consiste à extrapoler la trajectoire de l'agent perturbateur à partir de la suite des sites perturbés, ce qui est possible dès que la trajectoire est ébauchée, c'est-à-dire dès que deux sites au moins ont été perturbés.

L'anticipation de la trajectoire d'un agent perturbateur permet, en liaison avec les services de police, de provoquer l'arrestation de cet agent perturbateur. Ceci constitue une première protection apportée par l'invention. Une protection supplémentaire est apportée, à terme, par l'effet de dissuasion sur les agents perturbateurs potentiels dès l'instant où le système de protection de l'invention est connu et son efficacité reconnue.

De manière précise, l'invention a pour objet un système de protection d'un ensemble de sites d'un réseau comprenant, sur chaque site, un moyen de détection de l'état (en fonctionnement, en panne) du site, ledit système comprenant un moyen de surveillance, relié à chacun des moyens de détection, pour connaître en temps réel les modifications d'état des sites à la suite d'une perturbation, ledit système étant caractérisé en ce qu'il comprend :

- un moyen de mémorisation pour mémoriser la configuration du réseau et des caractéristiques fixes de

EP 0 232 198 B1

chaque site,
- un moyen de traitement comprenant un processeur, une mémoire contenant des instructions et une mémoire de travail, ledit processeur exécutant les instructions et étant apte à :
  . communiquer avec le moyen de surveillance pour être informé, en temps réel, d'une perturbation affectant un site,
  . mémoriser dans la mémoire de travail au moins une variable d'identification dudit site perturbé,
  . analyser le contenu de la mémoire de travail, après chaque mémorisation d'un site dans ladite mémoire de travail, dès lors qu'au moins deux sites perturbés sont identifiés, pour déterminer le nombre d'agents perturbateurs, cette détermination prenant en compte les données du moyen de mémorisation,
  . déterminer la trajectoire de chaque agent perturbateur, mémoriser dans la mémoire de travail des caractéristiques de chaque trajectoire, et extrapoler chaque trajectoire en tenant compte des données contenues dans le moyen de mémorisation et des données contenues dans la mémoire de travail, ladite extrapolation définissant pour chaque trajectoire au moins un site susceptible d'être prochainement perturbé, et
  . délivrer des signaux d'alarme pour indiquer au moins certains desdits sites susceptibles d'être prochainement perturbés.

Les caractéristiques et avantages de l'invention ressortiront mieux de la description qui va suivre, donnée à titre illustratif mais non limitatif, en référence aux dessins annexés, sur lesquels :
- la figure 1 représente un réseau de sites auquel est relié un système de protection conforme à l'invention,
- la figure 2 est un organigramme du fonctionnement du moyen de traitement de l'invention,
- la figure 3 représente le diagramme des états d'un site,
- la figure 4 représente le diagramme des états d'une trajectoire,
- la figure 5 représente schématiquement un quartier d'une ville comprenant plusieurs sites,
- les figures 6 et 7 montrent les chemins possibles pour le prolongement de la trajectoire d'un agent perturbateur respectivement après la deuxième perturbation et après la troisième perturbation sur des sites de la figure 5,
- la figure 8 représente schématiquement plusieurs niveaux d'une gare et la répartition de sites dans cette gare, et
- la figure 9 montre les chemins possibles pour le prolongement de la trajectoire d'un agent perturbateur après la deuxième perturbation sur un site de la figure 8.

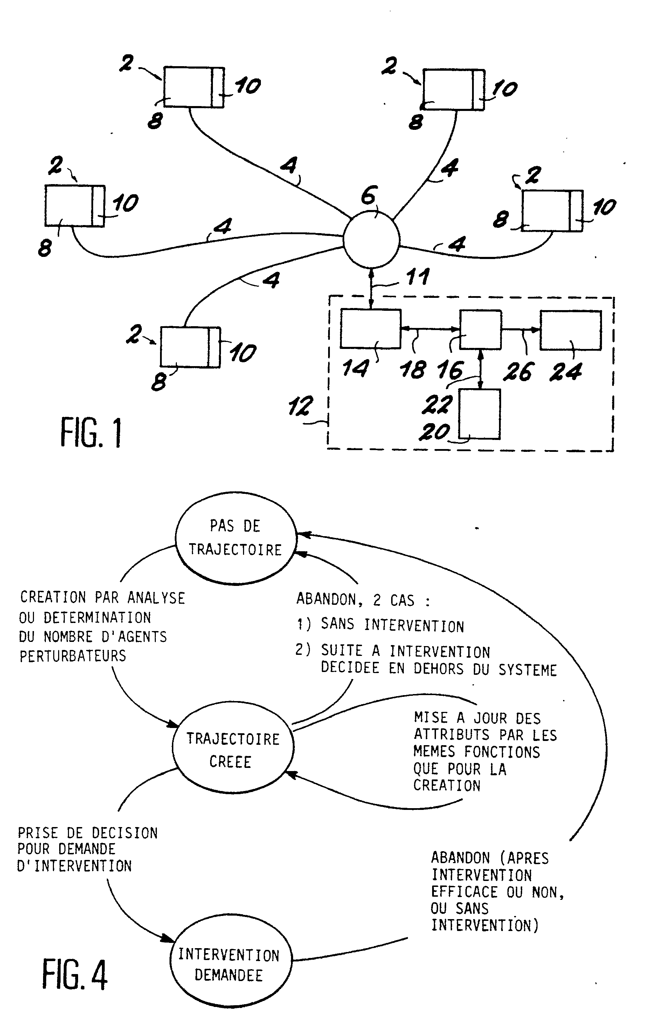

On a représenté sur la figure 1 un réseau de sites, auquel est relié un système de protection conforme à l'invention. Le réseau comprend une pluralité de sites 2 reliés chacun par une voie 4 à un moyen 6 d'exploitation du réseau. Ce moyen 6 est par exemple un auto-commutateur dans le cas où les sites 2 sont des cabines téléphoniques publiques, ou un ordinateur dans le cas où les sites 2 sont des distributeurs automatiques de billets de banque. Chaque site comprend un ensemble 8 composé d'un seul appareil (cabine téléphonique simple) ou de plusieurs appareils (cabine téléphonique multiple), et au moins un moyen de détection 10 pour contrôler l'état - en fonctionnement ou en panne - de chaque appareil de l'ensemble 8. Ces moyens de détection 10 sont conçus pour émettre des messages sur les voies 4 vers le moyen d'exploitation 6 pour indiquer qu'un appareil d'un site tombe en panne.

On connaît plusieurs systèmes de télésurveillance des cabines publiques. Dans le système DAHUT, un moyen de détection détectant un appareil tombant en panne envoie sur la ligne 4 un signal de fréquence prédéterminé ; ce système est décrit dans le brevet FR-A-2 499 437 déjà cité. Dans le système CACTUS, le moyen de détection comprend un circuit à microprocesseur qui peut communiquer avec un central d'alarme accessible par le réseau téléphonique en composant le numéro de téléphone de ce central.

Les systèmes DAHUT et CACTUS permettent l'émission d'alarmes diverses à partir des cabines téléphoniques publiques et l'édition de message d'alarme au central d'alarme du moyen d'exploitation. Ces systèmes ne comportent pas de moyen de mémorisation des alarmes.

La télésurveillance des cabines téléphoniques publiques peut être également assurée par le système ALPHA qui comporte un moyen de mémorisation de toutes les cabines téléphoniques publiques en panne à un instant donné. Ce système permet donc de connaître en permanence l'état du réseau.

On va maintenant décrire le système de protection de l'invention associé au réseau de sites. Ce système de protection 12 est relié au moyen d'exploitation 6 du réseau par une voie 11 de manière à pouvoir recevoir de ce dernier des informations sur l'état de fonctionnement des différents sites de ce réseau. Le système de protection comporte à cet effet un moyen de surveillance 14 relié au moyen d'exploitation 6 du réseau, et un moyen de traitement 16 comprenant au moins un processeur et une mémoire contenant des instructions exécutables par le processeur.

3

Le moyen de traitement 16 communique avec le moyen de surveillance par une voie 18 ; il prend ainsi connaissance en temps réel d'une perturbation affectant un site quelconque du réseau.

Le système de protection de l'invention comprend également un moyen de mémorisation 20, relié au moyen de traitement 16 par une voie 22, pour mémoriser des données définissant le réseau, c'est-à-dire notamment la localisation de chaque site, le nombre et la nature de chaque appareil dans chaque site, etc.. Le système de protection 12 comprend enfin un moyen d'affichage 24 recevant du moyen de traitement 16 des données par une voie 26. Ce moyen d'affichage peut être un terminal d'impression, un terminal de visualisation et, de manière générale, tout système connu utilisable pour communiquer à un opérateur le résultat des opérations effectuées par le moyen de traitement 16.

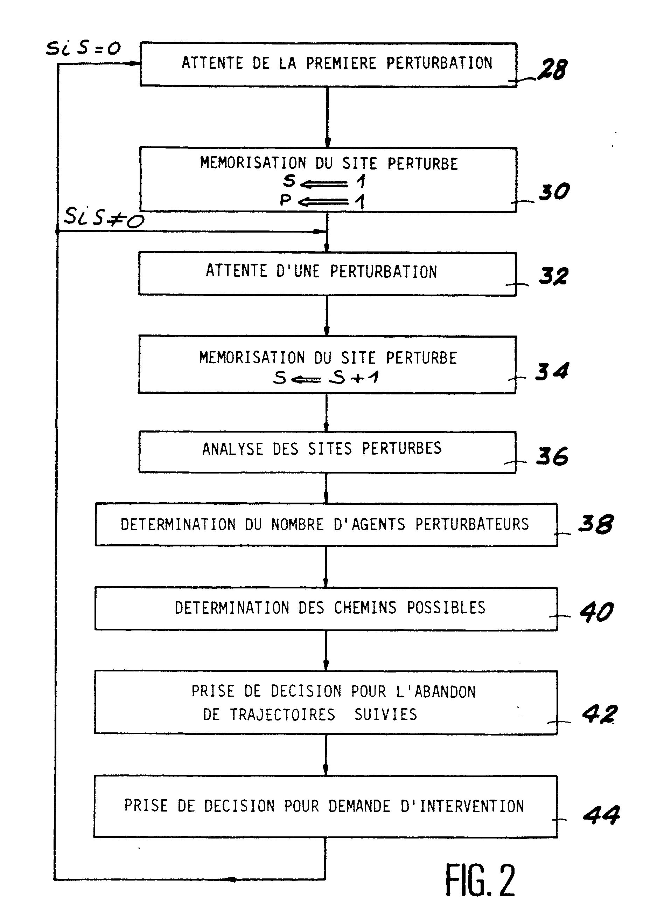

On a représenté sur la figure 2 un organigramme illustrant le fonctionnement du système de protection de l'invention. Dans une première étape 28, le système est en attente d'une première perturbation affectant un site. Cette étape consiste pour le moyen de traitement 16 du système de protection à communiquer avec le moyen de surveillance 14 pour être prévenu d'une perturbation affectant un site du réseau. Lorsqu'une telle perturbation est détectée, le traitement se poursuit par une étape 30 d'initialisation du nombre s des sites perturbés et du nombre p d'agents perturbateurs chacun à la valeur 1. Le système est alors placé à nouveau en attente d'une perturbation. Cette étape 32 est analogue à l'étape 28.

Lorsqu'une nouvelle perturbation est enregistrée, au moins une variable d'identification de ce site perturbé est mémorisée dans une mémoire de travail du moyen de traitement 16 et la variable $s$ est incrémentée (étape 34).

Après cette étape, la mémoire de travail du système de protection contient au moins deux sites perturbés. Il est donc possible d'étudier la trajectoire de l'agent perturbateur ou les trajectoires des agents perturbateurs. Le traitement effectué sur les données contenues dans la mémoire de travail comporte deux étapes successives : une étape d'analyse de la trajectoire de chaque agent perturbateur pour déterminer, s'il en existe, les caractéristiques de chaque trajectoire ; et une étape d'extrapolation des trajectoires pour anticiper le déplacement des agents perturbateurs et ainsi protéger les sites susceptibles d'être perturbés.

Les opérations d'analyse et d'anticipation effectuées par le moyen de traitement prennent en cômpte les caractéristiques de chaque site et les caractéristiques de chaque trajectoire déterminées. Les caractéristiques associées à un site peuvent varier en fonction du type de réseau étudié. A titre d'exemple, pour le réseau des cabines téléphoniques publiques, chaque site peut être défini par les caractéristiques, ou attributs, indiqués dans le tableau I ci-dessous.

## TABLEAU I

| Attributs | Nom | Paramètre |
|---|---|---|
| A1 | AD | adresse ou coordonnées spatiales du site, |
| A2 | TA | temps d'accès au site à partir de l'adresse |
| A3 | NSE | nombre de sites élémentaires |
| A4 | ME | mot d'état |
| A5 | DP | date de perturbation sur le site |
| A6 | PP | probabilité de perturbation |
| A7 | PA | probabilité d'appartenance à une trajectoire |

Les valeurs des attributs A1, A2 et A3 sont constantes. Ces attributs peuvent donc être mémorisés dans le moyen de mémorisation du système de protection. Le temps d'accès TA est non nul si le site est placé dans un endroit plus ou moins protégé, et le nombre NSE de sites élémentaires indique le nombre de postes téléphoniques sur le site. Ce nombre peut être différent de 1, par exemple pour un site composé d'une cabine multiposte ou d'une rangée de postes téléphoniques sur un mur (dans une gare, un

4

aéroport,...).

En revanche, les valeurs des attributs A3-A7 sont fonction des perturbations affectant le réseau. Ces attributs sont donc mémorisés dans la mémoire de travail du moyen de traitement.

Le mot d'état (attribut A4) peut prendre par exemple quatre valeurs : site actif, site perturbé, site avec perturbation plausible, et site choisi pour intervention.

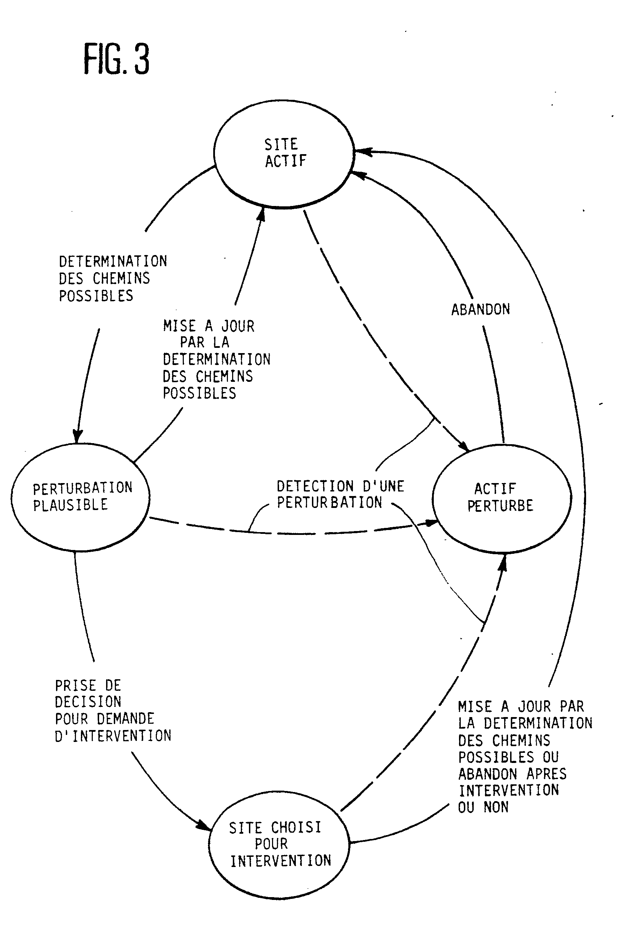

Le diagramme des états d'un site est représenté sur la figure 3. On y a indiqué les quatre états et les transitions possibles d'un état dans l'autre. Ces transitions sont dues soit à un événement, tel que la détection d'une perturbation (opération 28 ou 32, figure 2), soit à une décision résultant d'un traitement, telle que l'opération 40 de détermination des chemins possibles ou l'opération 42 de prise de décision pour l'abandon d'une trajectoire suivie, ou l'opération 44 de prise de décision pour demande d'intervention. (Les opérations 40, 42 et 44 seront décrites ultérieurement).

La date de perturbation DP (attribut A5) est la date effective si le site est perturbé et une date plausible de perturbation si le site est susceptible d'être perturbé. La valeur de la probabilité de perturbation PP (attribut A6) n'est signifiante que si le mot d'état a pour valeur "perturbation plausible".

Chaque site peut être composé de plusieurs sites élémentaires (NSE≠1). Pour chaque site élémentaire, on définit une durée de perturbation TP qui est une durée théorique passée par un agent perturbateur sur le site élémentaire. Cette durée est fixée par l'expérience.

Comme les sites, les trajectoires sont définies par plusieurs caractéristiques ou attributs. A titre d'exemple, dans le cas du réseau de cabines téléphoniques publiques, les attributs associés à une trajectoire peuvent être tels que représenté dans le tableau II ci-dessous.

## TABLEAU II

| Attributs | Nom | Paramètre |
|---|---|---|
| B1 | NT | nature de la trajectoire |
| B2 | VP | vitesse de l'agent perturbateur |
| B3 | TIM | temps d'intervention moyen par site élémentaire |
| B4 | CP | critère de progression de l'agent perturbateur |
| B5 | NP | nature des perturbations |
| B6 | ME | mot d'état |

La trajectoire peut être de différentes natures (attribut B1). Elle peut être pseudo-aléatoire ou liée à la topographie du milieu. L'attribut B3 définit la durée moyenne passée par un agent perturbateur sur un site élémentaire. Au début de la création d'une trajectoire, le paramètre TIM est initialisé à la valeur TP. L'attribut B5 renseigne sur la nature des perturbations, selon qu'elles affectent les cabines à monnayeur, les cabines à cartes ou tous les modèles de cabine.

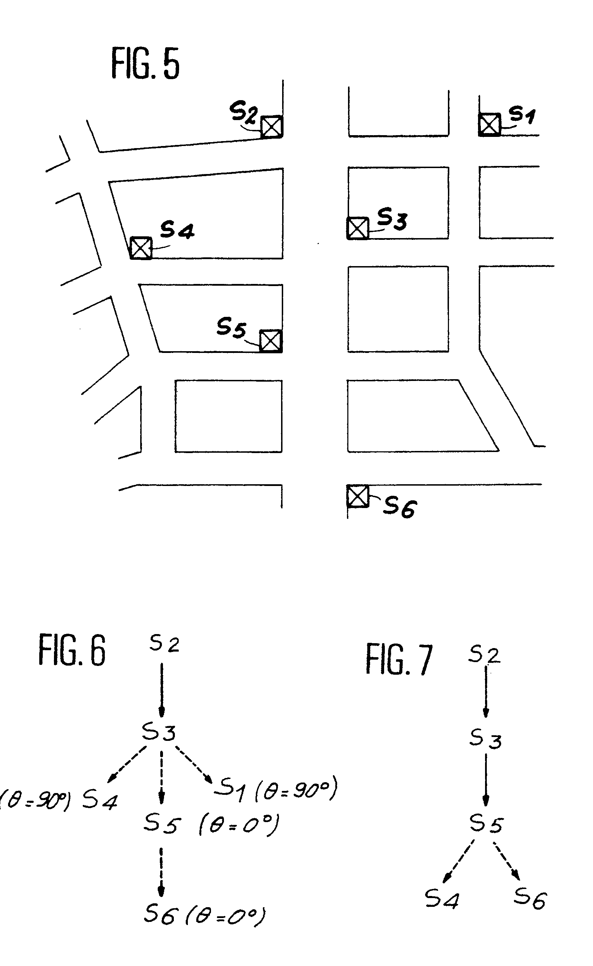

Le mot d'état (attribut B6) peut prendre trois valeurs pour indiquer une absence de trajectoire, une trajectoire créée, et une intervention demandée sur une trajectoire. Le diagramme des états d'une trajectoire est représenté sur la figure 4. Les transitions entre ces différents états résultent soit d'une mise à jour d'une trajectoire par ajout du dernier site perturbé, soit d'une décision de demande d'intervention, soit d'un abandon de la trajectoire.

Revenons maintenant à l'organigramme de la figure 2.

L'opération 36 d'analyse des sites consiste à mettre à jour la valeur des attributs des sites et des trajectoires mémorisés dans la zone de travail du moyen de traitement.

L'opération suivante (étape 38) est la détermination du nombre d'agents perturbateurs, c'est-à-dire du nombre de trajectoires. Pour cela, pour chaque trajectoire $i(1 \le i \le P)$ contenue dans la mémoire de travail, on calcule la vitesse $V_i$ de déplacement de l'agent perturbateur entre le site perturbé le plus récent de la trajectoire $i$ et le dernier site perturbé, et on compare cette vitesse $V_i$ à la vitesse moyenne $VP_i$ (attribut B2) de l'agent perturbateur sur la trajectoire $i$. Si la différence relative entre ces vitesses est inférieure à un seuil prédéterminé, c'est-à-dire si $VP_i.(1-b) < V_i < VP_i.(1+h)$, où b et h sont constantes positives, le dernier site perturbé est ajouté à la trajectoire i.

On peut par exemple définir la probabilité d'appartenance d'un site perturbé à une trajectoire (attribut A7 d'un site) de la manière suivante. On définit d'abord un taux de vraisemblance

$$t_i = 1 - \frac{|v_i - VP_i|}{VP_i}$$

pour les cas où le site peut appartenir à la trajectoire i, et une probabilité d'appartenance à cette trajectoire

$$PA_i = \frac{t_i}{\sum_j t_j}$$

où la somme sur l'indice j porte sur l'ensemble des taux de vraisemblance associés aux trajectoires d'indice j pouvant contenir le dernier site perturbé. Si cet ensemble de trajectoires est vide, une nouvelle trajectoire est créée ; celle-ci ne contient que le dernier site perturbé.

Les étapes 36 et 38 réalisent une mise à jour des valeurs des caractéristiques des sites et des trajectoires contenues dans la mémoire de travail, en fonction du dernier site perturbé.

A partir de ces données, on détermine dans une étape 40 les prolongements possibles pour chaque trajectoire. Ces prolongements se font essentiellement en tenant compte de la nature de la trajectoire (attribut B1) et de la nature des perturbations (B5).

Le prolongement d'une trajectoire peut conduire à des chemins possibles multiples, certains chemins pouvant se rejoindre. Les sites situés sur ces chemins passent de l'état actif à l'état de perturbation plausible (voir figure 3). Pour ces sites, on calcule la date présumée de la perturbation (attribut A5) et la probabilité de cette perturbation (attribut A6).

Si un site dans l'état de perturbation plausible appartient à plusieurs chemins possibles, sa date présumée de perturbation est la plus faible, c'est-à-dire la plus proche dans le temps, des dates présumées de perturbation résultant des différents chemins, et sa probabilité de perturbation est la somme des probabilités de perturbation données par chaque chemin possible.

Les probabilités de perturbation des sites susceptibles d'être perturbés sont calculées de proche en proche pour les sites d'un même chemin. Plus précisément, si $p_k$ est la probabilité de perturbation d'un site d'un chemin, la probabilité de perturbation $p_j$ d'un site j suivant le site k sur un chemin est égale à :

$$p_j = p_k \cdot \frac{pr_j}{\sum pr_m}$$

où la somme est étendue à tous les sites m possibles à partir du site k, et $pr_j$ est une fonction de préférence qui tient compte notamment de la situation du site j par rapport au site k (proximité, visibilité,...).

Le nombre de sites j analysés, ou en d'autres termes la longueur des chemins possibles prolongeant les trajectoires définies par les sites perturbés, est choisi de telle façon que l'anticipation dans le temps soit au moins égale au temps d'intervention TI qui représente le temps jugé nécessaire pour intervenir efficacement.

La décision d'abandon d'une trajectoire (opération 42, figure 2) peut être prise après qu'il y ait eu intervention sur l'un des sites, sur demande ou en dehors du système de protection. Elle peut également être prise lorsqu'il apparaît que la trajectoire n'est plus compatible avec les derniers sites perturbés. L'abandon d'une trajectoire peut enfin être automatique si la durée entre la date de la dernière perturbation enregistrée et la date présente est supérieure à une durée maximale prédéterminée DL.

La décision de demande d'intervention (opération 44, figure 2) sur un site susceptible d'être perturbé dépend à la fois de la date présumée de la perturbation et de la probabilité de la perturbation. Plus exactement, il faut que la date présumée de la perturbation soit postérieure à la date présente augmentée de la durée TI prédéterminée définissant la durée nécessaire pour intervenir efficacement. De plus, la probabilité de perturbation doit être supérieure à un seuil prédéterminé SI.

On note que si la trajectoire de l'agent perturbateur a un seul prolongement possible, la probabilité de la perturbation est égale à 1. La décision d'intervention ne repose alors que sur la date présumée de la perturbation.

On a décrit, en référence à la figure 1 le système de protection de l'invention et, en référence aux figures 2 à 4, le fonctionnement du moyen de traitement de ce système de protection. Les différentes opérations effectuées par ce moyen de traitement ont été décrites de manière générale, sans faire référence à une configuration de réseau particulière. Il est clair cependant que certaines opérations effectuées par le moyen de traitement, telles que la détermination des chemins possibles, sont fonction de la configuration du réseau étudié.

Pour une meilleure compréhension du fonctionnement du système de protection de l'invention, on trouvera ci-dessous la description du fonctionnement du moyen de traitement du système de protection dans deux exemples de réseaux particuliers.

EXEMPLE 1

Le réseau se compose de cabines téléphoniques publiques implantées dans une ville. On a représenté schématiquement sur la figure 5 la carte d'un quartier de cette ville et la position de six sites $S_1$, $S_2$,..., $S_6$, chaque site comportant un ou plusieurs postes téléphoniques publics. Les sites $S_2$, $S_3$, $S_5$ et $S_6$ se trouvent dans une artère principale et les sites $S_1$ et $S_4$ dans des rues adjacentes. Le tableau III, ci-dessous, résume les valeurs des attributs A3 à A6 des sites en l'absence de perturbation. L'attribut A7 a été omis pour des raisons de simplifications (une trajectoire seule). On suppose de plus que les sites sont facilement accessibles, c'est-à-dire que le temps d'accès TA (attribut A2) est nul. Enfin, l'attribut A1 contient soit une adresse (numéro et nom de rue), soit des coordonnées spatiales du site dans le plan.

### TABLEAU III

| Site | Nb de sites élémentaires (NSE) | mot d'état (ME) | date de perturbation (DP) | Probabilité de perturbation (PP) |
|---|---|---|---|---|
| $S_1$ | 1 | actif | – | – |
| $S_2$ | 2 | " | – | – |
| $S_3$ | 2 | " | – | – |
| $S_4$ | 1 | " | – | – |
| $S_5$ | 2 | " | – | – |
| $S_6$ | 2 | " | – | – |

L'un des paramètres essentiels du système de protection de l'invention est la fonction de préférence pr. Celle-ci a pour rôle de déterminer, de la façon la plus correcte possible, les probabilités de choix d'un agent perturbateur. Elle doit donc tenir compte des notions propres à un comportement humain.

Elle peut avantageusement prendre en compte au moins une des notions suivantes :
- le trafic du site, surtout dans le cas des cabines téléphoniques à monnayeur,
- la proximité entre les sites,
- la visibilité d'un site à un autre, et
- la directivité ; si le perturbateur intervient sur une artère importante, il a tendance à la suivre.

Dans l'exemple décrit, on choisit la fonction de préférence suivante :

$$pr = \frac{\alpha + \beta.\cos\theta}{d}$$

où $\alpha + \beta.\cos\theta$ est une fonction de directivité et $1/d$ est une fonction de proximité ; $\alpha$ et $\beta$ sont des coefficients prédéterminés et $\theta$ mesure l'écart entre la direction du chemin prolongé reliant un site considéré, susceptible d'être perturbé, au site précédent sur le chemin ou sur la trajectoire et la direction du chemin ou de la trajectoire se terminant sur ledit site précédent ; d est la distance entre le site considéré et le site précédent sur le chemin ou la trajectoire.

On choisit, à titre d'exemple, les valeurs suivantes pour les différents paramètres du système de protection de l'invention : VS = 50 km/h, b = 0,7 ; h = 2 ; TI = 15 mn ; TP = 3 mn ; DL = 1 h ; SI = 60% ; $\alpha$ = 0,6 ; $\beta$ = 0,4. Pour les distances entre sites, on utilise les valeurs suivantes $d(S_1,S_3)$ = 500 m ; $d(S_2,S_3)$ = 350 m ; $d(S_3,S_4)$ = 550 m ; $d(S_3,S_5)$ = 350 m ; $d(S_4,S_5)$ = 450 m ; $d(S_5,S_6)$ = 450 m.

Tant qu'il n'y a pas de perturbation, le système de protection reste en attente de la première perturbation.

Supposons qu'à la date $t_0$ = 21h00mn, une alarme se déclenche sur le site $S_2$. Alors :

a) - le système initialise à la valeur 1 les variables s et p indiquant le nombre de sites perturbés et le nombre d'agents perturbateurs ; le site $S_2$ est mémorisé dans la mémoire de travail. Son mot d'état prend la valeur "perturbé" et sa date de perturbation DP la valeur 21h00mn,

b) - une première trajectoire est créée ; son mot d'état prend la valeur "créée". TIM est initialisé à la valeur de TP. Les autres attributs de la trajectoire sont vides.

Le système se place ensuite en attente d'une autre perturbation. Supposons que celle-ci soit détectée sur le site $S_3$ à la date $t_1$ = 21h13mn. Alors :

a) - la valeur de la variable s est incrémentée ; le site $S_3$ est mémorisé dans la mémoire de travail ; son mot d'état prend la valeur "perturbé" et sa date de perturbation DP la valeur 21h13mn,

b) - la vitesse de l'agent perturbateur est

$$VP = \frac{d(S_2,S_3)}{t_1 - t_0 - NSE_{(S_2)}.TIM} = 3 \ km/h$$

c) - mise à jour des attributs de la trajectoire $T_1$ :
. B1 : critère de progression : site le plus proche
. B2 : VP = 3km/h,
. B3 : TIM = 3 mn,
. B4 : -
. B5 : -

d) - le nombre p d'agents perturbateurs reste égal à 1 puisque VP < VS,

e) - détermination des chemins possibles :
ils sont obtenus par prolongement de la trajectoire entre les sites $S_2$ et $S_3$ comme représenté sur la figure 6. Les valeurs de l'angle $\theta$ sont justifiées par le fait que les sites $S_3$, $S_5$ et $S_6$ sont sur la même artère et que, pour atteindre les sites $S_1$ et $S_4$, il faut prendre une rue perpendiculaire à l'artère principale,

f) - probabilité de perturbation :
les sites $S_1$, $S_4$ et $S_5$ sont directement accessibles à partir du site $S_3$. Le calcul de la fonction de préférence pr pour chacun d'eux donne $pr_1 = 12.10^{-4}$, $pr_4 = 10,9.10^{-4}$ et $pr_5 = 28,6.10^{-4}$. On en déduit la probabilité de perturbation $PP_i$, où i = 1,4,5 par la relation $PP_i = pr_i/(pr_1 + pr_4 + pr_5)$, soit $PP_1 = 0,233$, $PP_4 = 0,212$ et $PP_5 = 0,555$. Comme, de plus, le site $S_5$ peut être atteint à partir du site $S_4$, on corrige la probabilité de perturbation du site $S_5$ en ajoutant la probabilité de perturbation du site $S_4$, soit $PP_5 = 0,555 + 0,212 = 0,767$. Enfin, un chemin unique relie le site $S_6$ aux autres sites, donc $PP_6 = PP_5 = 0,767$.

g) - date des perturbations plausibles :
elle se calcule par la relation

$$t_j = t_i + \frac{d_{ij}}{VP} + NSE_j.TIM$$

où j se rapporte au site considéré et i à son antécédent sur le chemin. On obtient $t_{21}$ = 21h29mn pour le site $S_1$, $t_{24}$ = 21h30mn pour le site $S_4$, $t_{25}$ = 21h26mn pour le site $S_5$ et $t_{26}$ = 21h41mn pour le site $S_6$.

Pour le site $S_5$, on calcule les dates de perturbation par le chemin $S_3 \rightarrow S_5$ et par le chemin $S_3 \rightarrow S_4 \rightarrow S_5$, et on retient la date la plus proche,

h) - prise de décision pour abandon de trajectoire : Le problème ne se pose pas : la trajectoire est unique et la durée écoulée entre les perturbations sur les sites $S_2$ et $S_3$ est inférieure à la durée limite DL fixée à 1h,

i) - prise de décision pour demande d'intervention. il faut simultanément que la date de perturbation plausible soit supérieure à la date présente $t_1$ augmentée du temps d'intervention TI et que la probabilité de perturbation soit supérieure au seuil SI.

Ces conditions ne sont vérifiées que pour le site $S_6$.

Le tableau IV résume la valeur des paramètres ME, DP et PP des sites à l'issue du traitement.

### TABLEAU IV

| site | état ME | date de perturbation DP | Probabilité de perturbation PP |
|---|---|---|---|
| $S_1$ | P.P.(1) | 21h29 | 0,233 |
| $S_2$ | perturbé | 21h00 | 1 |
| $S_3$ | perturbé | 21h13 | 1 |
| $S_4$ | P.P.(1) | 21h30 | 0,212 |
| $S_5$ | P.P.(1) | 21h26 | 0,767 |
| $S_6$ | S.C.P.I.(2) | 21h41 | 0,767 |

(1) = perturbation plausible

(2) = site choisi pour intervention

Le système de protection informe l'exploitant du réseau du site choisi pour intervention et se place en attente d'une nouvelle perturbation jusqu'à la date limite $t_1 + DL$, c'est-à-dire 22h13mn.

Supposons maintenant qu'une perturbation affecte le site $S_5$ à la date $t_2 = 21h32mn$, alors :

a) - la variable s est incrémentée, le mot d'état du site $S_5$ prend la valeur "perturbé" et sa date de perturbation est égale à 21h32mn,

b) - la vitesse de l'agent perturbateur entre les sites $S_3$ et $S_5$ est $v = d(S_3,S_5)/(t_2-t_1-NSE.TIM) = 1,6$ km/h. On vérifie que la relation $VP(1-b) < V < VP(1+h)$ est réalisée,

c) - on met à jour la vitesse moyenne VP de l'agent perturbateur sur la trajectoire. Le calcul donne $VP = 2,4$ km/h. Les autres attributs de la trajectoire sont inchangés.

d) - le nombre d'agents perturbateurs est toujours égal à 1 puisque VP < VS,

e) - détermination des chemins possibles :

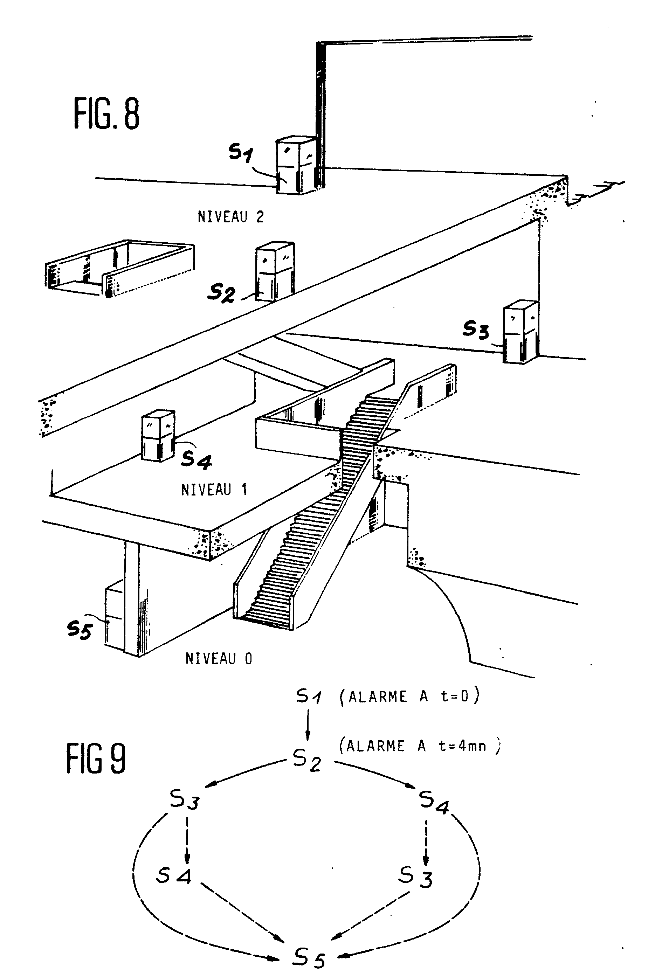

ils sont représentés sur la figure 7. Seuls les sites $S_4$ et $S_6$ sont susceptibles d'être perturbés compte tenu du critère de progression (attribut B1 de la trajectoire ; le critère est : "site le plus proche"),

f) - probabilité des perturbations :

les fonctions de préférence pour les sites $S_4$ et $S_6$ sont respectivement égales à $pr_4 = 0,6/450$ et $pr_6 = 1/450$, d'où les probabilités de perturbation $PP_4 = 0,375$ et $PP_6 = 0,625$,

g) - date des perturbations plausibles :

la date de la perturbation sur le site $S_6$ est mise à jour :

$$t_6 = t_2 + \frac{d(S_5,S_6)}{VP} + NSE.TIM = 21h50mn,$$

h) - l'abandon de la trajectoire ne se pose pas,

i) - on remarque que $PP_6$ reste supérieur à SI. La demande d'intervention sur le site $S_6$ n'est donc pas remise en cause. L'exploitant du réseau est informé de la nouvelle date de perturbation plausible sur le site $S_6$.

EXEMPLE 2

Il concerne une fraction d'un réseau composé de sites répartis dans une gare à trois niveaux. Cette gare est représentée schématiquement sur la figure 8 et la localisation de chaque site y est précisée. Un site se compose de plusieurs cabines téléphoniques comme indiqué sur le tableau V.

## TABLEAU V

| Site | NSE |
|------|-----|
| $S_1$ | 1 |
| $S_2$ | 2 |
| $S_3$ | 2 |
| $S_4$ | 3 |
| $S_5$ | 2 |

La gare constitue un site complexe particulier, notamment pour ce qui concerne les relations entre sites qui ne peuvent pas être décrites simplement par les distances entre sites.

A titre d'exemple, on retient les paramètres suivants pour le système :
- le critère de progression (attribut B1) est la proximité entre sites,
- la durée de perturbation sur chaque site élémentaire est TP = 3mn,
- le temps de déplacement entre deux sites d'un même niveau est de 1 mn,
- le temps de déplacement entre deux sites de deux niveaux consécutifs est de 2 mn,
- le temps d'intervention est TI = 10 mn,
- la fonction de préférence est pr = NSE.

Supposons qu'une première perturbation affecte le site $S_1$ à une date $t_1$ prise comme origine des temps (soit $t_1 = 0$) et qu'une deuxième perturbation est détectée sur le site $S_2$ à $t_2 = 4mn$.

Les caractéristiques des sites perturbés sont mémorisées de la même manière que dans l'exemple 1. De même, une première trajectoire contenant les sites $S_1$ et $S_2$ est créée.

Les chemins possibles prolongeant cette trajectoire sont notés en trait tireté sur la figure 9. Quatre chemins sont possibles à partir de $S_2$. Ce sont $S_2 \rightarrow S_3 \rightarrow S_5$ ; $S_2 \rightarrow S_3 \rightarrow S_4 \rightarrow S_5$ ; $S_2 \rightarrow S_4 \rightarrow S_3 \rightarrow S_5$ et $S_5 \rightarrow S_4 \rightarrow S_5$.

La probabilité de perturbation PP de chaque site suivant chaque chemin se calcule à partir de la fonction de préférence comme dans l'exemple 1. La date de perturbation DP est également calculée. On obtient les valeurs suivantes :
- pour le site $S_3$ à partir du site $S_2$ : PP = 0,4 et DP = 12mn,
- pour le site $S_4$ à partir du site $S_2$ : PP = 0,6 et DP = 12 mn,
- pour le site $S_4$ à partir du site $S_3$ : PP = 0,24 et DP = 19 mn,
- pour le site $S_3$ à partir du site $S_4$ : PP = 0,3 et DP = 22 mn,
- pour le site $S_5$ : DP = 20 mn (valeur pour le chemin le plus rapide).

Compte tenu du temps d'intervention TI égal à 10 mn et de la date de la deuxième perturbation survenant à $t_2 = 4mn$, il faut choisir, pour une demande d'intervention, un site dont la date présumée de perturbation soit supérieure à 14 mn.

La figure 8 montre que les sites $S_3$ et $S_4$ conviennent. L'équipe d'intervention peut soit constater le flagrant délit, soit attendre, soit se déplacer d'un site vers l'autre du niveau 1, ceci en fonction de ce qui se passe à $t = 12mn$.

**Revendications**

1. Système de protection d'un ensemble de sites d'un réseau comprenant, sur chaque site, un moyen (10) de détection de l'état (en fonctionnement, en panne) du site, ledit système comprenant un moyen de surveillance (14), relié à chacun des moyens de détection, pour connaître en temps réel les modifications d'état des sites à la suite d'une perturbation, ledit système étant caractérisé en ce qu'il comprend :

   - un moyen de mémorisation (20) pour mémoriser la configuration du réseau et des caractéristiques fixes de chaque site,
   - un moyen de traitement (16) comprenant un processeur, une mémoire contenant des instructions et une mémoire de travail, ledit processeur exécutant les instructions et étant apte à :
     . communiquer avec le moyen de surveillance pour être informé, en temps réel, d'une perturbation affectant un site,
     . mémoriser dans la mémoire de travail au moins une variable d'identification dudit site perturbé,
     . analyser le contenu de la mémoire de travail, après chaque mémorisation d'un site dans ladite mémoire de travail, dès lors qu'au moins deux sites perturbés sont identifiés, pour déterminer le nombre d'agents perturbateurs, cette détermination prenant en compte les données du moyen de mémorisation,
     . déterminer la trajectoire de chaque agent perturbateur, mémoriser dans la mémoire de travail des caractéristiques de chaque trajectoire, et extrapoler chaque trajectoire en tenant compte des données contenues dans le moyen de mémorisation et des données contenues dans la mémoire de travail, ladite extrapolation définissant pour chaque trajectoire au moins un site susceptible d'être prochainement perturbé, et
     . délivrer des signaux d'alarme pour indiquer au moins certains desdits sites susceptibles d'être prochainement perturbés.

2. Système selon la revendication 1, caractérisé en ce que, à chaque site, est associée au moins l'une des caractéristiques suivantes :
   - adresse du site,
   - temps d'accès au site à partir de l'adresse,
   - nombre de sites élémentaires composant le site.

3. Système selon la revendication 2, caractérisé en ce que, à chaque site, est associée dans la mémoire de travail au moins une des caractéristiques suivantes :
   - mot d'état,
   - date d'une perturbation effective ou plausible sur le site,
   - probabilité d'une perturbation sur le site,
   - probabilité d'appartenance du site à une trajectoire.

4. Système selon la revendication 3, dans lequel chaque site comprend un mot d'état, le mot d'état pouvant prendre les trois valeurs suivantes :
   - "actif", si le site est en fonctionnement,
   - "perturbation plausible", si le site est en fonctionnement mais si l'extrapolation des trajectoires définit au moins un chemin contenant ledit site,
   - "perturbé" si le site est en panne.

5. Système selon la revendication 4, dans lequel le processeur est apte à désigner, parmi les sites dont l'état est "perturbation plausible", un site sur lequel un agent perturbateur est susceptible d'être appréhendé par une équipe d'intervention, le mot d'état dudit site prenant une quatrième valeur égale à "site choisi pour intervention".

6. Système selon la revendication 5, caractérisé en ce que le site choisi pour intervention est tel que sa probabilité de perturbation est supérieure à un seuil (SI) et sa date de perturbation plausible est supérieure à la date présente augmentée d'une durée prédéterminée (DI), égale à la durée nécessaire à l'équipe d'intervention pour intervenir.

7. Système selon l'une quelconque des revendications 3 à 6, caractérisé en ce que la probabilité de perturbation d'un site est calculée par le moyen de traitement à partir d'une fonction de préférence qui prend en compte au moins l'un des paramètres suivants :

- nature du site,
- proximité entre sites,
- directivité, et
- nombre de sites élémentaires du site.

**Claims**

1. System for the protection of a group of locations of a network comprising, on each location, a means (10) for detecting the state (operating or faulty) of the location, said system comprising a monitoring means (14) connected to each of the detection means to establish in real time the modifications of state of the locations as a result of vandalism, said system being characterized in that it comprises a storage means (20) for storing the configuration of the network and fixed characteristics of each location; a processing means (16) comprising a processor, a memory containing instructions and a working memory, said processor performing the instructions and being able to communicate with the monitoring means so that it can be informed in real time of vandalism affecting a location, storing in the working memory at least one identification variable of said vandalized location, analyzing the content of the working memory following each storage of a location therein, as soon as at least two vandalized locations have been identified, in order to determine the number of vandals, said determination taking account of the data of the storage means, determining the trajectory of each vandal, storing in the working memory the characteristics of each trajectory and extrapolating each trajectory, whilst taking account of the data contained in the storage means and the data contained in the working memory, said extrapolation defining for each trajectory at least one location liable to be vandalized in the near future and supplying alarm signals to indicate at least certain of the said locations liable to be vandalized in the near future.

2. System according to claim 1, characterized in that with each location is associated at least one of the following characteristics, location address, access time to the location from the address, number of elementary locations forming the location.

3. System according to claim 2, characterized in that with each location, is associated in the working memory at least one of the following characteristics, status word, time data of an effective or plausible act of vandalism on the location, probability of an act of vandalism on the location, probability of the location belonging to a trajectory.

4. System according to claim 3, characterized in that each location comprises a status word, the latter being able to assume the three following values, "active", if the location is operating, "plausible vandalization", if the location is operating, but the extrapolation of the trajectories defines at least one path containing said location, "vandalized", if the location is faulty.

5. System according to claim 4, characterized in that the processor is able to designate among the locations whose state is "plausible vandalization" a location where a vandal is liable to be apprehended by an intervention team, the status word of said location assuming a fourth value equal to "location chosen for intervention".

6. System according to claim 5, characterized in that the location chosen for the intervention is such that its vandalization probability exceeds a threshold (SI) and its plausible vandalization data exceeds the present time data increased by a predetermined time (DI) equal to the time necessary for the intervention team to intervene.

7. System according to any one of the claims 3 to 6, characterized in that the vandalization probability of a location is calculated by the processing means on the basis of a preference function, which takes into account at least one of the following parameters, nature of the location, distance between locations, directivity and number of elementary locations of the location.

**Patentansprüche**

1. Schutzsystem für ein System von Stellen eines Netzes mit einer Einrichtung (10) zum Erfassen des Zustands (in Betrieb, defekt) der Stelle an jeder Stelle, wobei das System eine Überwachungseinrichtung (14) aufweist, die mit jeder der Erfassungseinrichtungen verbunden ist, um die Zustandsänderungen der Stellen nach einer Störung in Echtzeit zu erkennen, wobei das System dadurch **gekennzeichnet** ist, daß es aufweist:

- eine Speichereinrichtung (20) zum speichern der Anordnung des Netztes und der für jede Stelle charakteristischen Werte,
- eine Bearbeitungseinrichtung (16) mit einem Rechner, einem Instruktionen enthaltenden Speicher und einen Arbeitsspeicher, wobei der Rechner die Instruktionen ausführt und geeignet ist:
  - zum Datenaustausch mit der Überwachungseinrichtung, um in Echtzeit über eine eine Stelle betreffende Störung unterrichtet zu werden,
  - zum Speichern wenigstens einer Variablen zum Identifizieren der gestörten Stelle in dem Arbeitsspeicher,
  - zum Analysieren des Inhalts des Arbeitsspeichers nach jeder die Stelle betreffenden Abspeicherung in dem Arbeitsspeicher, seitdem mindestens zwei gestörte Stellen identifiziert wurden, um die Zahl der Störfaktoren zu bestimmen, wobei bei dieser Bestimmung die Daten der Speichereinrichtung berücksichtigt werden,
  - zum Bestimmen der Trajektorie jedes Störfaktors, zum Speichern der charakteristischen Werte für jeden Trajektorie im Arbeitsspeicher und zum Extrapolieren jeder Trajektorie unter Berücksichtigung der in der Speichereinrichtung enthaltenen Daten und der im Arbeitsspeicher enthaltenen Daten, wobei diese Extrapolation für jede Trajektorie wenigstens eine Stelle definiert, an der vermutliche der nächste Störfall auftreten wird, und
  - zum Erzeugen von Alarmsignalen, um wenigstens bestimmte dieser Stellen anzeigen, an denen vermutlich der nächste Störfall auftreten wird.

2. System nach Anspruch 1, **dadurch gekennzeichnet, daß** jede Stelle wenigstens einen der folgenden charakteristischen Werte aufweist:
   - Stellenadresse,
   - Zugriffszeit zur Stelle nach der Adresse,
   - Anzahl der diese Stelle bildenden Grundeinheiten.

3. System nach Anspruch 2, **dadurch gekennzeichnet, daß** jeder Stelle im Arbeitsspeicher wenigstens einer der folgenden charakteristischen Werte zugeordnet ist:
   - Zustandswort,
   - Zeitpunkt einer tatsächlichen oder wahrscheinlichen Störung der Stelle,
   - Wahrscheinlichkeit einer Störung der stelle,
   - Wahrscheinlichkeit der Zugehörigkeit der Stelle zu einer Trajektorie.

4. System nach Anspruch 3, bei dem jede Stelle ein Zustandswort aufweist, welches die drei folgenden Werte annehmen kann:
   - "in Betrieb", wenn die Stelle arbeitet,
   - "Störung wahrscheinlich", wenn die Stelle arbeitet, aber die Extrapolation der Trajektorie wenigstens eine die fragliche Stelle aufweisenden Pfad definiert,
   - "gestört", wenn die Stelle nicht betriebsbereit ist.

5. System nach Anspruch 4, bei dem der Rechner geeignet ist, unter den Stellen, deren Zustand "Störung wahrscheinlich" ist, eine Stelle zu bestimmen, bei ein Störfall durch eine Eingreiftruppe wahrscheinlich zu befürchen ist, wobei der Zustand der betreffenden Stelle einen vierten Wert "für ein Eingreifen ausgewählte Stelle" annnimmt.

6. System nach Anspruch 5, **dadurch gekennzeichnet, daß** die für das Eingreifen ausgewählte Stelle so ist, daß die Wahrscheinlichkeit ihrer Störung oberhalb eines Schwellenwertes (S1) liegt und der Zeitpunkt ihrer wahrscheinlichen Störung oberhalb des momentanen Datums liegt, welches um eine vorgegebene Zeitdauer (DI) vergrößert wurde, die gleich der Zeitspanne ist, die für die Eingreiftruppe zum Eingreifen erforderlich ist.

7. System nach einem der Ansprüche 3 bis 6, **dadurch gekennzeichnet, daß** die Wahrscheinlichkeit eines Störfalls einer Stelle mittels einer Bearbeitungseinrichtung nach einer Prioritätsfunktion berechnet wird, die wenigstens einen der folgenden Parameter berücksichtigt:
   - Art der Stelle,

- Entfernung zu den anderen Stellen,
- Richtfähigkeit und
- Anzahl der Basiseinheiten der Stellen.

FIG. 1

CREATION PAR ANALYSE
OU DETERMINATION
DU NOMBRE D'AGENTS
PERTURBATEURS

ABANDON, 2 CAS :

1) SANS INTERVENTION

2) SUITE A INTERVENTION
DECIDEE EN DEHORS DU SYSTEME

MISE A JOUR DES
ATTRIBUTS PAR LES
MEMES FONCTIONS
QUE POUR LA
CREATION

PRISE DE DECISION
POUR DEMANDE
D'INTERVENTION

ABANDON (APRES
INTERVENTION
EFFICACE OU NON,
OU SANS
INTERVENTION)

FIG. 4

PAS DE TRAJECTOIRE

TRAJECTOIRE CREEE

INTERVENTION DEMANDEE

15

Si S = 0

ATTENTE DE LA PREMIERE PERTURBATION — *28*

MEMORISATION DU SITE PERTURBE
$S \Longleftarrow 1$
$P \Longleftarrow 1$
— *30*

Si S ≠ 0

ATTENTE D'UNE PERTURBATION — *32*

MEMORISATION DU SITE PERTURBE
$S \Longleftarrow S + 1$
— *34*

ANALYSE DES SITES PERTURBES — *36*

DETERMINATION DU NOMBRE D'AGENTS PERTURBATEURS — *38*

DETERMINATION DES CHEMINS POSSIBLES — *40*

PRISE DE DECISION POUR L'ABANDON
DE TRAJECTOIRES SUIVIES
— *42*

PRISE DE DECISION POUR DEMANDE D'INTERVENTION — *44*

FIG. 2

# FIG. 3

FIG. 5

FIG. 6

$S_2$

$S_3$

$(\theta=90°)$ $S_4$        $S_1 (\theta=90°)$

$S_5$ $(\theta=0°)$

$S_6 (\theta=0°)$

FIG. 7

$S_2$

$S_3$

$S_5$

$S_4$        $S_6$

# FIG. 8

$S_1$

NIVEAU 2

$S_2$

$S_3$

$S_4$

NIVEAU 1

$S_5$

NIVEAU 0

# FIG 9

$S_1$ (ALARME A t=0)

(ALARME A t=4mn)

$S_2$

$S_3$      $S_4$

$S_4$      $S_3$

$S_5$

19